# EUROPEAN PATENT SPECIFICATION

(11) **EP 1 705 051 B1**
(45) Date of publication and mention of the grant of the patent: **11.03.2009**
(21) Application number: 06005675.1
(22) Date of filing: 20.03.2006
(51) Int. Cl.: B60K 15/035, F16K 17/194, F16K 24/04

(54) **Low profile overfill limit device with reverse flow capability**
Tankentlüftungsventil
Clapet pour la ventilation d'un réservoir de carburant liquide

(30) Priority: 22.03.2005 US 86690
(43) Date of publication of application: 27.09.2006
(73) Proprietor: Eaton Corporation, Cleveland, Ohio 44114-2584 (US)
(72) Inventor: Mills, Vaughn K., Chelsea Michigan 48118-9556 (US); Spink, Kenneth M., Jerome Michigan 49249-9517 (US)
(74) Representative: Rüger, Barthelt & Abel Patentanwälte

(56) References cited:
- EP-A- 1 199 207
- US-A- 5 582 198
- US-A1- 2004 007 262
- US-A1- 2004 025 937
- US-A1- 2004 112 437
- US-B1- 6 343 590

## Description

### BACKGROUND

Small engines, as they are often referred to, are widely considered to be engines of less than approximately 50 horsepower (37.2 kilowatts) and are employed for applications such as lawn mowers, garden tractors, portable generating sets and certain marine applications. Small engines for such applications typically have the fuel tank mounted proximate the engine for ease of installation of the engine on the appliance. Such small engine applications generally have a tank disposed for gravity fuel feed to the engine carburetor; however, in certain specialized applications with engines approaching 50 h.p. fuel pumps may be employed.

Small engine fuel tanks generally have a user removable filler cap or closure which has formed therein a vent passage for permitting make up air to enter the tank as fuel is withdrawn during engine operation to prevent vacuum formation therein and subsequent collapse of the tank.

Fuel vapor emissions restrictions or limitations previously were only required for motor vehicles but have recently been mandated for small engines. Previously, because no such limitations were required for small engines, the fuel tank and fuel system were free to emit fuel vapors to the atmosphere both during engine operation and during periods of engine shut down.

Small engines are manufactured in very high volumes in mass production; and, the tooling for the fuel tanks and fuel system and mounting of the tank and the fuel system components on the engines has been a significant expense for the manufacturer of the engines. Furthermore in a significant number of applications for small engines, the space or volume allotted for the engine and fuel tank is highly restricted; and, adding components to the engine and tank, or requiring tank redesign is prohibitively costly.

US 2004/0112437 A1 discloses a valve assembly for controlling the internal gas pressure of a liquid tank, comprising a non-return valve having a valve body extending into the tank, a vapor vent orifice formed in an upper wall of the valve body, a valve seat formed on the upper end of the vapor vent orifice, a vent cap received over the valve such that the vapor vent orifice communicates with a vapor outlet port of the vent cap, and a control valve disposed over the valve seat for controlling the internal gas pressure of the tank. The control valve has a main body operable as a valving member to cooperate with the valve seat and consisting of an upper part and a lower part fitted tightly into the upper part and having a curved portion for closing against the valve seat. A central passage is formed in the main body in the continuity of the vapor vent orifice. A pressure relief valve member in the form of a ball is axially moveably disposed in the central passage with a clearance existing between the ball and the wall of the central passage. In the case of a vacuum created within the tank, the ball rests on a stop formed at the lower end of the central passage in the lower part of the main body, permitting an air flow from the exterior through the central passage into the tank. If the pressure in the tank becomes slightly greater than the external pressure the ball is pushed against a seat formed at the upper end of the central passage, thus, blocking any gas flow therethrough. Above a certain pressure threshold the main body of the control valve is lifted off of the valve seat, thus, permitting a vent flow from the interior of the tank around the main body to the exterior.

Other overfull limiting vapor vent/tipping valve assembly configurations with pressure and vacuum relief are disclosed in the documents US 2004/0025937 A1, US 2004/0007262 A1 and US-A-5,582,198, of which the latter also discloses a valving member having a substantially planar portion for cooperating with a valve seat formed on a horizontal partition wall plate attached to a main body of the valve.

Accordingly, it has been desired to provide a way or means of limiting fuel vapor emission on small engines without requiring redesign of the fuel tank and related fuel system components or the addition of components which would add volume to the envelope of the engine and fuel tank thereby complicating installation and increasing manufacturing costs of such small engines in the appliances in which they are employed. The present invention is developed in light of these considerations. It is defined by independent claims 1.11 and 19, respectively. Further features of the invention are set forth in dependent claims.

### SUMMARY

The present specification, drawings and claims present a solution to the above described problem of providing fuel vapor emission control for small engines wherein a low profile overfill limiting vapor vent/tipping valve assembly with pressure and vacuum relief is provided with a compact design and adapted for attachment through the wall of an existing fuel tank structure. In one embodiment, the valve assembly described herein utilizes a cap with a vapor outlet port therein and which is formed of material weldable to the tank wall with the overflow limiting vapor vent/tipping valve attached to the cap to form a sub assembly. The cap is then welded to the surface of the tank wall. In another embodiment, the valve body is formed integrally as one piece with the upper portion of the fuel tank wall structure, The valve assembly includes a pressure relief valve permitting the vapor above a predetermined pressure to escape through the cap vent outlet; and, the valve assembly also includes a vacuum relief valve to permit reverse flow in the event of formation of a vacuum in the fuel tank to prevent collapse of the tank. The presently described valve assembly thus enables the provision of the necessary functions to retain and limit the escape of fuel vapor from the tank to the atmosphere yet permits flow of vapor under engine operation from the valve outlet which is adapted for connection to either a vapor storage device or the engine air inlet.

### BRIEF DESCRIPTION OF THE DRAWINGS

FIG. 1 is a cross section of a small engine fuel tank with the valve assembly described herein mounted through an access opening;

FIG. 2 is an enlarged view of the valve body subassembly of FIG. 1; and

FIG. 3 is an exploded view of the subassembly of FIG. 2; and,

FIG. 4 is a cross section of a small engine fuel tank illustrating another embodiment.

### DETAILED DESCRIPTION

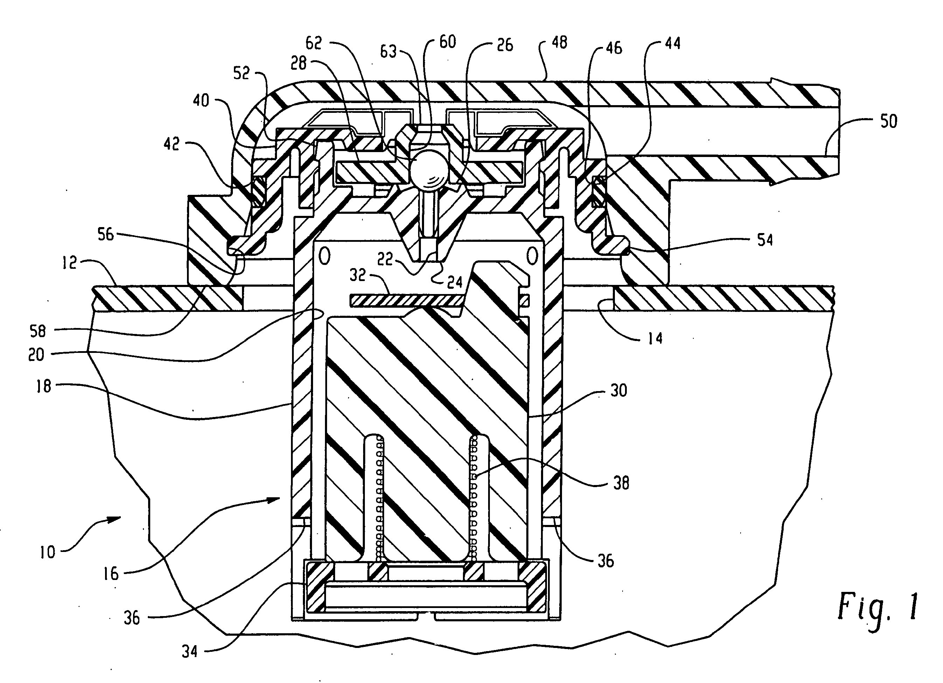

Referring to FIG. 1, a portion of a small engine fuel tank is indicated generally at 10 and has the upper wall structure 12 formed with an access opening 14 therein with an overfill limiting vapor vent/tipping valve assembly indicated generally at 16 disposed with the body 18 thereof extending downwardly through the access only into the interior of the tank.

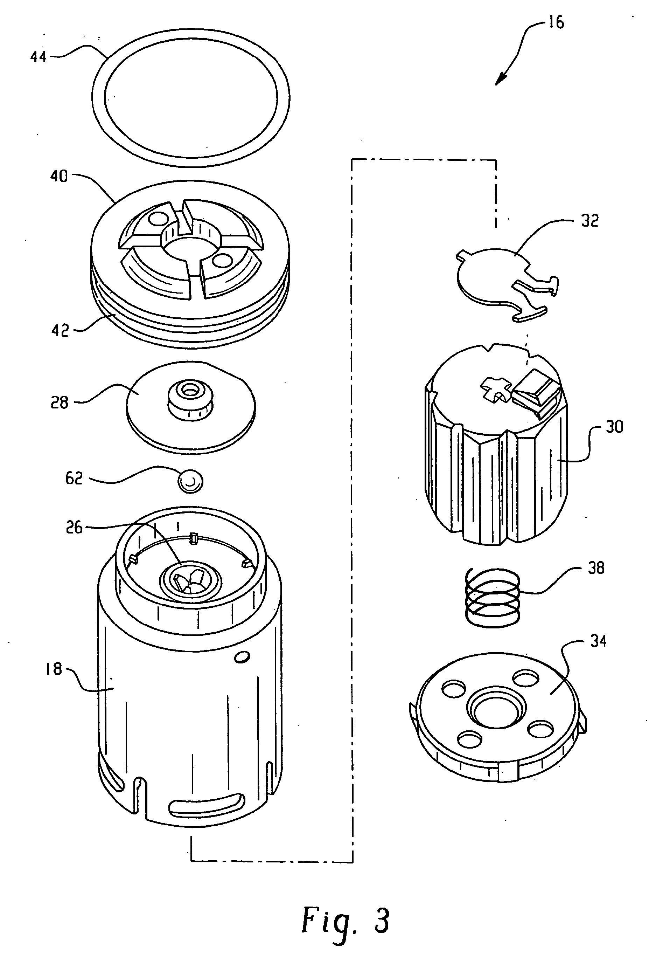

Referring to FIGS. 1-3, the valve body 18 has a valving chamber 20 formed therein which communicates through a vent passage 22 which may be vertically oriented with a valve seat 24 formed at the lower end thereof. The upper end of passage 22 has a second valve seat 26 formed thereabout with a valving member 28 seated thereon; and, in the present practice the valve member 28 is formed of a material such as metal to rest against the valve seat 26 under the influence of gravitational forces. The weight of member 28 and the diameter of valve seat 26 are chosen such that when a predetermined pressure exists in the valving chamber 20, valve 28 is lifted off of the seat 26 and vapor flows through passage 22.

Valving chamber 20 has disposed therein a float 30 with a flexible valve member such as strip 32 which may be formed of elastomeric material disposed on the upper surface thereof. Upon the float 30 rising to a predetermined fuel level in the tank, member 32 closes upon valve seat 24 preventing vapor from entering the passage 22. Float 30 is retained in valving chamber 20 by a retaining ring 34; and, suitable passages 36 are formed in the valve body to admit liquid fuel into the valving chamber 20. In the present practice, it has been found satisfactory to facilitate the movement of the float with an additional bias spring 38 between the float and the retaining member 34, which may be calibrated for moving the float in the direction of buoyancy to close valve member 32 on seat 24 at a desired level of fuel in the tank and at a predetermined tilt angle

The valve body 18 is attached to an upper body portion or insert 40 which may have a generally inverted cup shape with an annular groove 42 formed about the outer periphery thereof, which groove has received therein a sealing ring such as an o-ring 44 which seals about the inner wall 46 of a cap 48 which has an outlet or vapor purge passage 50 formed therein.

The body 18 is attached to the insert 40 by any suitable mechanical expedient, such as snap locking tabs 52. It will be understood that the valve body may be formed of material not weldable to the tank for structural integrity; however, the cap 48 is formed of material weldable to the tank such as by sonic or spin welding to form a sub assembly including the valve member 28 and insert 40. The sub assembly is retained in the cap by any suitable mechanical expedient such as interference fit or snap locking of annular flange 54 into a groove 56 formed in the cap. Alternatively, insert 40 may be formed of material weldable to cap 48 and secured thereto by weldment. The rim 58 of the cap with the valve assembled therein may then be secured to the surface of the tank wall 12 by any suitable expedient such as weldment.

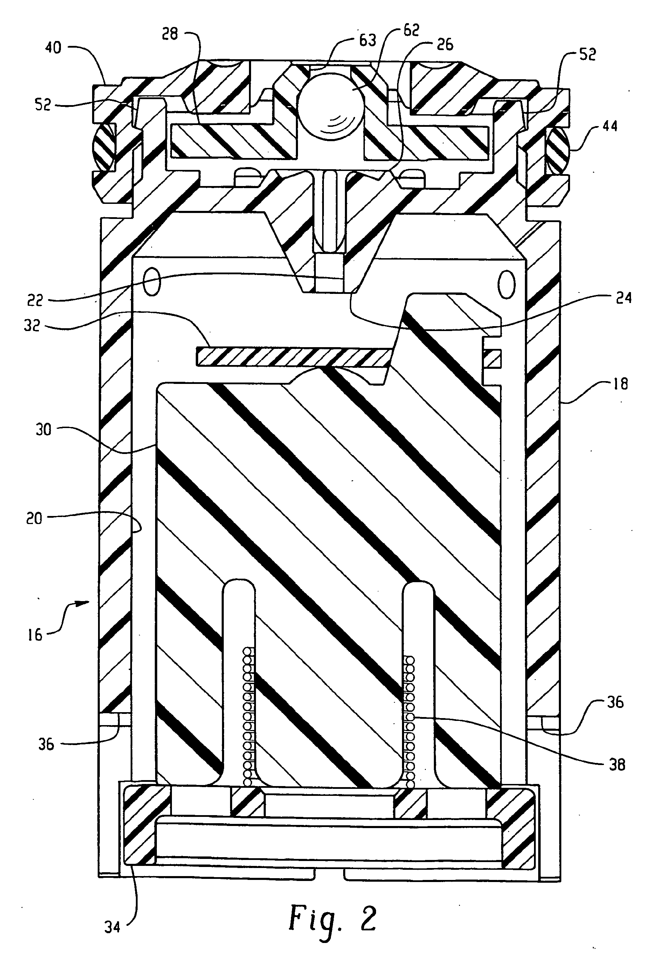

The gravity responsive valve member 28 has a valving chamber 60 formed therein with a vertically oriented flow passage 63 formed in the upper end thereof which passage communicates with the interior of the cap 48 and the purge outlet 50. Valving chamber 60 has received therein a feather light valve member 62 which, upon the slightest vapor pressure through passage 22 is moved to the position shown in FIG. 2 to close passage 63; and thereafter valve member 62 maintains the passage 63 closed. Thereafter, as the pressure in the passage 22 rises the gravity valve member 28 is caused to be moved to the upward limit position shown in FIG. 2 and vapor flow therearound is permitted to the purge outlet passage 50.

In the event of sub-atmospheric pressure in the chamber 20, the valve member 62 is caused to move downwardly opening passage 63 and permitting reverse flow into passage 50 and into the fuel tank. Thus, valve 62 permits make up air to enter the fuel tank as liquid fuel is withdrawn during engine operation; or, in the event of cooling of the vapor and formation of a vacuum in the tank while the engine is shut down.

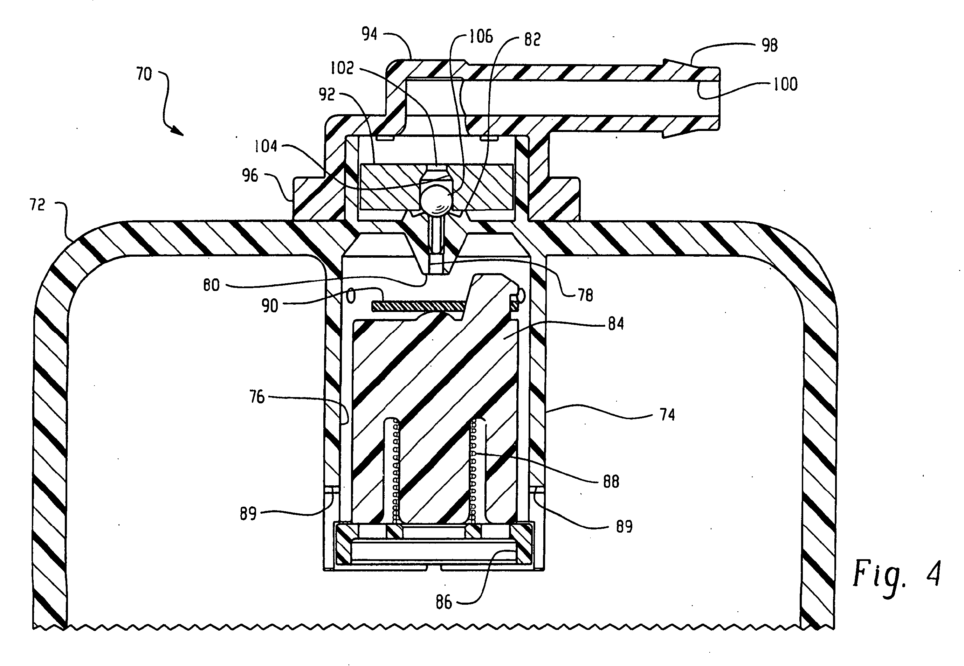

Referring to FIG. 4, another embodiment is indicated generally at 70 in which an upper portion 72 of the fuel tank wall structure has formed integrally therewith as one piece a valve body 74 which extends inwardly from the tank wall structure and defines a valving chamber 76 with a vertically oriented vent passage 78 through the wall structure of the tank. Passage 78 has a valve seat 80 formed on the lower end thereof with a second valve seat 82 formed about the upper end thereof.

Valving chamber 76 has disposed therein a float 84 which is retained by a retaining member 86 disposed in the lower end of the chamber 76; and, a bias spring 88 is disposed between the lower end of the float 84 and the retaining member 86 for biasing the float in an upward direction. As is known in the art, spring 88 may be calibrated to assist the buoyancy of the float 84.

The upper end of the float has disposed thereon a relatively thin flexible valve member 90 which may be formed of elastomeric material and which is operative upon upward movement of the float to close against valve seat 80 at the desired liquid level of fuel in the tank. The valving chamber 76 has slots 89 formed in the lower end thereof to admit liquid fuel to valving chamber 76.

A pressure relief valve member 92 is disposed over the valve seat 82 on the upper end of vent passage 78; and, the valve member 92 is urged against the valve seat 82 by the gravitational forces acting on the valve member 92 which may be formed of metal. The diameter of the valve seat 82 is chosen such that when a predetermined vapor pressure exists in the tank the pressure acting across the area of the valve seat is operative to produce a lifting force sufficient to overcome the rake weight of the valve member 92 lifting the valve member off of the valve seat 82 and permitting fuel vapor to escape from the tank.

A cap 94 formed of material weldable to the tank wall 72 is received over the valve member 92; and, the cap 94 has an annual flange 96 which is then joined to the tank wall by weldment, such as by hot plate, sonic or spin welding. Cap 94 includes integrally therewith a fitting 98 adapted for receiving a flexible hose thereon and which has a vapor outlet passage 100 formed therethrough which communicates with the valve seat 82.

The valve member 92 has a vertical passage 102 formed therethrough which has an inverted valve seat 104 formed therein.

The valve seat 104 opens into an enlarged diameter passage which has received and retained therein a valve member 106 which in the present practice has a spherical configuration. The valve member 106 is generally feather-light and formed of plastic material such that, upon the slightest positive vapor pressure in the chamber 76 and passage 78, the member 106 is moved upwardly to close against valve seat 104 and remains closed thereagainst so long as a positive vapor pressure exists in the chamber 76. Upon the occurrence of a sub atmospheric pressure in the tank, chamber 76 and vent passage 78, valve member 106 is drawn downwardly to open valve seat 104 and permit reverse flow through the passage 100. Valve member 106 thus functions as a vacuum relief valve to admit make up air as fuel is withdrawn from the tank during engine operation, or after cooling and vapor condensation during engine shut down.

The presently described low profile vapor vent/tipping valve assembly includes a pressure relief function which prevents vapor from venting from the tank until a predetermined vapor pressure is reached; and, the valve assembly also includes a vacuum relief valve to permit reverse flow and entry of make up air as fuel is withdrawn from the tank or cooling of vapor creates a vacuum therein.

Although an exemplary embodiment has been described and illustrated hereinabove, it will be understood that modifications and variations may be made by those skilled in the art within the scope of the following claims.

## Claims

1. The combination of a small engine fuel tank (10) and an overfill limiting vapor vent/tipping valve assembly (16, 70) with pressure and vacuum relief comprising:
a tank wall structure (12, 72) defining an access opening (14, 78),
a vent cap (48, 94) with a vapor outlet port (50, 100), wherein the cap is formed of a material weldable to the fuel tank,
a valve (30, 32, 84, 90) having a valve body (18, 74) with a vapor vent passage (22, 78) formed therein, wherein the valve body has a pressure relief valve seat (26, 82) formed thereon and wherein the vent cap is received over the valve such that the vapor vent passage (22, 78) communicates with the vapor outlet port (50, 100), and wherein the vent cap is sealingly joined to the tank wall structure,
a pressure relief valve (28, 92) disposed over the pressure relief valve seat (26, 82), the pressure relief valve (28, 92) having a substantially planar portion for closing against the pressure relief valve seat (26, 82), and
a valve member (60, 62, 104, 106) disposed in the vapor vent passage (22, 78), wherein the valve member is housed by the pressure relief valve (28, 92) and has a moveable valve member (62, 106) operable to rest on the valve body, and wherein the valve extends into the fuel tank.

2. The combination defined in claim 1, wherein said valve includes a pressure relief valve operable to prevent flow through the vent passage until a predetermined vapor pressure level is reached in the fuel tank.

3. The combination defined in claim 2, wherein said pressure relief valve includes a vacuum relief valve (60, 62, 104, 106) operable to permit reverse flow through the pressure relief valve when sub-atmospheric pressure occurs in the fuel tank.

4. The combination defined in claim 3, wherein the vacuum relief valve includes a spherical valve member (62, 106).

5. The combination defined in claim 1, wherein the valve includes a float operated valve (30, 84).

6. The combination defined in claim 5, wherein the float operated valve includes a flexible valve member (32, 90) disposed on the upper surface thereof.

7. The combination defined in claim 1, wherein the pressure relief valve includes a valve member (62, 106) that is gravity biased to a closed position.

8. The combination defined in claim 7, wherein a vacuum' relief valve is disposed in the gravity biased value member.

9. The combination defined in claim 1, wherein the valve body (18) is formed of material that is not weldable to the tank wall structure.

10. The combination defined in claim 1, wherein the valve includes a valve body (74) integrated with a portion of the tank wall structure.

11. A method of making a small engine fuel tank (10) with an overfill limiting vapor vent/tipping valve assembly comprising:
forming a vent cap (48, 94) of material weldable to the fuel tank and forming a vapor outlet passage (50, 100) in the vent cap;
disposing a valve (30, 32, 84, 90) in the fuel tank, the valve having a valve body (18,74) with a vapor vent passage (22, 78) formed therein and a pressure relief valve seat (26, 82) formed thereon;
disposing a pressure relief valve (28, 92) over the pressure relief valve seat (26, 28), the pressure relief valve (28, 92) having a substantially planar portion for closing against the pressure relief valve seat (26, 28) to prevent flow to the vapor outlet passage (50, 100) at a fuel tank vapor pressure below a predetermined pressure level;
disposing a valve member (60, 62, 104, 106) in the vapor vent passage (22, 78), wherein the valve member is housed by the pressure relief valve (28, 92) and has a moveable valve member (62, 106) operable to rest on the valve body; and
positioning the vent cap (48, 94) over the pressure relief valve (28, 92) and attaching the vent cap to the wall of the fuel tank.

12. The method defined in claim 11, wherein the step of attaching the vent cap to the wall of the tank includes welding. ;

13. The method defined in claim 11, wherein the step of disposing a pressure relief valve (28, 92) includes disposing a vacuum relief valve (60, 62, 104, 106).

14. The method defined in claim 13, wherein the step of disposing a vacuum relief valve includes disposing a moveable valve member (62, 106) in the pressure relief valve.

15. The method defined in claim 14, wherein the step of disposing a moveable valve member includes disposing a spherical valve member (62, 106).

16. The method defined in claim 11 wherein the step of disposing a valve includes disposing a float operated valve (30, 84).

17. The method defined in claim 11, wherein the step of disposing a valve includes attaching the valve to the cap to form a sub assembly before joining the vent cap to the fuel tank

18. The method defined in claim 11 wherein the step of disposing a valve includes integrating a valve body member (74) with a portion of the tank wall structure.

19. A valve assembly (16) for use in a small engine fuel tank, comprising:
a vent cap (48, 94) with a vapor outlet port (50, 100), the cap being formed of material weldable to the fuel tank;
a valve (30, 32, 84, 90) having a valve body (18, 74) with a vapor vent passage (22, 78) formed therein and a pressure relief valve seat (26, 82) formed thereon, wherein the vent cap is received over the valve such that the vapor vent passage (22, 78) communicates with the vapor outlet port (50, 100), and wherein the vent cap is configured to sealingly join to the fuel tank, and wherein the valve is adapted to extend into the fuel tank,
a pressure relief valve (28, 92) disposed over the pressure relief valve seat (26, 82), the pressure relief valve (28, 92) having a substantially planar portion for closing against the pressure relief valve seat (26, 82), and
a valve member (60, 62, 104, 106) disposed in the vent passage (22, 78), wherein the valve member (60, 62, 104, 106) is housed by the pressure relief valve (28, 92) and has a moveable valve member (62, 146) operable to rest on the valve body.

20. The valve assembly of claim 19, wherein the pressure relief valve is operable to prevent flow through the vent passage until a predetermined vapor pressure level is reached in the fuel tank.

21. The valve assembly of claim 20, wherein said pressure relief valve includes a vacuum relief valve (60, 62, 104, 106) operable to permit reverse flow through the pressure relief valve when sub-atmospheric pressure occurs in the fuel tank.

22. The valve assembly of claim 21, wherein the vacuum relief valve includes a spherical valve member (62, 106).

23. The valve assembly of claim 19, wherein the valve includes a float operated valve (30, 84) disposed in the valve body (18, 74).

24. The valve assembly of claim 23, wherein the float operated valve includes a flexible valve member (32, 90) disposed on the upper surface thereof.

25. The valve assembly of claim 19, wherein the pressure relief valve includes a valve member (62, 106) that is gravity biased to a closed position.

26. The valve assembly of claim 19, wherein the valve body (18) is formed of material that is not weldable to the fuel tank wall structure.

## Patentansprüche

1. Kombination aus einem kleinen Motorkraftstofftank (10) und einer Überfüllungsbegrenzungs-Dampfentlüftungs-/Kippventilanordnung (16, 70) mit Druck- und Unterdruckentlastung, die aufweist:
eine Tankwandstruktur (12, 72), die eine Zugangsöffnung (14, 78) definiert,
eine Entlüftungskappe (48, 94) mit einem Dampfauslassanschluss (50, 100), wobei die Kappe aus einem an den Kraftstofftank anschweißbaren Material ausgebildet ist,
ein Ventil (30, 32, 84, 90), das einen Ventilkörper (18, 74) mit einem darin ausgebildeten Dampfentlüftungskanal (22, 78) aufweist, wobei der Ventilkörper einen daran gebildeten Druckentlastungsventilsitz (26, 82) aufweist und wobei die Entlüftungskappe über dem Ventil derart aufgenommen ist, dass der Dampfentlüftungskanal (22, 78) mit dem Dampfauslassanschluss (50, 100) kommuniziert, und wobei die Entlüftungskappe mit der Tankwandstruktur dichtend verbunden ist,
ein Druckentlastungsventil (28, 92), das über dem Druckentlastungsventilsitz (26, 82) angeordnet ist, wobei das Druckentlastungsventil (28, 82) einen im Wesentlichen ebenen Abschnitt zum Schließen gegen den Druckentlastungsventilsitz (26, 82) aufweist, und
ein Ventilelement (60, 62, 104, 106), das in dem Dampfentlüftungskanal (22, 78) angeordnet ist, wobei das Ventilelement durch das Druckentlastungsventil (28, 92) aufgenommen ist und ein bewegbares Ventilelement (62, 106) aufweist, das eingerichtet ist, um sich auf dem Ventilkörper aufzustützen, und wobei sich das Ventil in den Kraftstofftank hinein erstreckt.

2. Kombination nach Anspruch 1, wobei das Ventil ein Druckentlastungsventil enthält, das betriebsfähig ist, um einen Durchfluss durch den Entlüftungskanal zu verhindern, bis in dem Kraftstofftank ein vorbestimmtes Dampfdruckniveau erreicht ist.

3. Kombination nach Anspruch 2, wobei das Druckentlastungsventil ein Unterdruckentlastungsventil (60, 62, 104, 106) enthält, das betriebsfähig ist, um einen Rückstrom durch das Druckentlastungsventil zuzulassen, wenn in dem Kraftstofftank ein Unterdruck auftritt.

4. Kombination nach Anspruch 3, wobei das Unterdruckentlastungsventil ein sphärisches Ventilelement (62, 106) enthält.

5. Kombination nach Anspruch 1, wobei das Ventil ein Schwimmer betätigtes Ventil (30, 84) enthält.

6. Kombination nach Anspruch 5, wobei das Schwimmer betätigte Ventil ein elastisches Ventilelement (32, 90) enthält, das auf seiner oberen Fläche angeordnet ist.

7. Kombination nach Anspruch 1, wobei das Druckentlastungsventil ein Ventilelement (62, 106) enthält, das durch Schwerkraft gegen eine Schließstellung vorbelastet ist.

8. Kombination nach Anspruch 7, wobei in dem durch Schwerkraft vorbelasteten Ventilelement ein Unterdruckentlastungsventil angeordnet ist.

9. Kombination nach Anspruch 1, wobei der Ventilkörper (18) aus einem Material ausgebildet ist, das nicht an die Tankwandstruktur anschweißbar ist.

10. Kombination nach Anspruch 1, wobei das Ventil einen Ventilkörper (74) enthält, der gemeinsam mit einem Teil der Tankwandstruktur integriert ist.

11. Verfahren zur Herstellung eines kleinen Motorkraftstofftanks (10) mit einer Überfüllungsbegrenzungs-Dampfentlüftungs-/Kippventilanordnung, das aufweist:
Bildung einer Entlüftungskappe (48, 94) aus einem an den Kraftstofftank anschweißbaren Material und Bildung eines Dampfauslasskanals (50, 100) in der Entlüftungskappe;
Anordnen eines Ventils (30, 32, 84, 90) in dem Kraftstofftank, wobei das Ventil einen Ventilkörper (18, 74) mit einem darin ausgebildeten Dampfentlüftungskanal (22, 78) und einen daran ausgebildeten Druckentlastungsventilsitz (26, 82) aufweist;
Anordnen eines Druckentlastungsventils (28, 92) über dem Druckentlastungsventilsitz (26, 28), wobei das Druckentlastungsventil (28, 92) einen im Wesentlichen ebenen Abschnitt zum Schließen gegen den Druckentlastungsventilsitz (26, 28) aufweist, um einen Durchfluss zu dem Dampfauslasskanal (50, 100) bei einem Kraftstofftankdampfdruck unterhalb eines vorbestimmten Druckniveaus zu verhindern;
Anordnen eines Ventilelementes (60, 62, 104, 106) in dem Dampfentlüftungskanal (22, 78), wobei das Ventilelement durch das Druckentlastungsventil (28, 92) aufgenommen ist und ein bewegbares Ventilelement (62, 106) aufweist, das eingerichtet ist, um sich auf dem Ventilkörper aufzustützen; und
Positionieren der Entlüftungskappe (48, 94) über dem Druckentlastungsventil (28, 92) und Anbringen der Entlüftungskappe an die Wand des Kraftstofftanks.

12. Verfahren nach Anspruch 11, wobei der Schritt des Anbringens der Entlüftungskappe an die Wand des Tanks Schweißen enthält.

13. Verfahren nach Anspruch 11, wobei der Schritt des Anordnens eines Druckentlastungsventils (28, 92) ein Anordnen eines Unterdruckentlastungsventils (60, 62, 104, 106) enthält.

14. Verfahren nach Anspruch 13, wobei der Schritt des Anordnens eines Unterdruckentlastungsventils ein Anordnen eines bewegbaren Ventilelementes (62, 106) in dem Druckentlastungsventil enthält.

15. Verfahren nach Anspruch 14, wobei der Schritt des Anordnens eines bewegbaren Ventilelementes ein Anordnen eines sphärischen Ventilelementes (62, 106) enthält.

16. Verfahren nach Anspruch 11, wobei der Schritt des Anordnens eines Ventils ein Anordnen eines Schwimmer betätigten Ventils (30, 84) enthält.

17. Verfahren nach Anspruch 11, wobei der Schritt des Anordnens eines Ventils ein Anbringen des Ventils an der Kappe enthält, um eine Untereinheit zu bilden, bevor die Entlüftungskappe mit dem Kraftstofftank verbunden wird.

18. Verfahren nach Anspruch 11, wobei der Schritt des Anordnens eines Ventils eine Integration eines Ventilkörperelementes (74) gemeinsam mit einem Teil der Tankwandstruktur enthält.

19. Ventilanordnung (16) zur Verwendung in einem kleinen Motorkraftstofftank, die aufweist:
eine Entlüftungskappe (48, 94) mit einem Dampfauslassanschluss (50, 100), wobei die Kappe aus einem an den Kraftstofftank anschweißbaren Material ausgebildet ist;
ein Ventil (30, 32, 84, 90), das einen Ventilkörper (18, 74) mit einem darin ausgebildeten Dampfentlüftungskanal (22, 78) und einem daran ausgebildeten Druckentlastungsventilsitz (26, 82) aufweist, wobei die Entlüftungskappe über dem Ventil derart aufgenommen ist, dass der Dampfentlüftungskanal (22, 78) mit dem Dampfauslassanschluss (50, 100) kommuniziert, und wobei die Entlüftungskappe eingerichtet ist, um mit dem Kraftstofftank dichtend verbunden zu sein, und wobei das Ventil eingerichtet ist, um sich in den Kraftstofftank hinein zu erstrecken,
ein Druckentlastungsventil (28, 92), das über dem Druckentlastungsventilsitz (26, 82) angeordnet ist, wobei das Druckentlastungsventil (82, 92) einen im Wesentlichen ebenen Abschnitt aufweist, um gegen den Druckentlastungsventilsitz (26, 82) zu schließen, und
ein Ventilelement (60, 62, 104, 106), das in dem Entlüftungskanal (22, 78) angeordnet ist, wobei das Ventilelement (60, 62, 104, 106) durch das Druckentlastungsventil (82, 92) aufgenommen ist und ein bewegbares Ventilelement (62, 106) aufweist, das eingerichtet ist, um sich auf dem Ventilkörper aufzustützen.

20. Ventilanordnung nach Anspruch 19, wobei das Druckentlastungsventil funktionsfähig ist, um einen Durchfluss durch den Entlüftungskanal zu verhindern, bis ein vorbestimmtes Dampfdruckniveau in dem Kraftstofftank erreicht ist.

21. Ventilanordnung nach Anspruch 20, wobei das Druckentlastungsventil ein Unterdruckentlastungsventil (60, 62, 104, 106) enthält, das funktionsfähig ist, um einen Rückfluss durch das Druckentlastungsventil zuzulassen, wenn in dem Kraftstofftank ein Unterdruck auftritt.

22. Ventilanordnung nach Anspruch 21, wobei das Unterdruckentlastungsventil ein sphärisches Ventilelement (62, 106) enthält.

23. Ventilanordnung nach Anspruch 19, wobei das Ventil ein Schwimmer betätigtes Ventil (30, 84) enthält, das in dem Ventilkörper (18, 74) angeordnet ist.

24. Ventilanordnung nach Anspruch 23, wobei das Schwimmer betätigte Ventil ein elastisches Ventilelement (32, 90) enthält, das auf seiner oberen Fläche angeordnet ist.

25. Ventilanordnung nach Anspruch 19, wobei das Druckentlastungsventil ein Ventilelement (62, 106) enthält, das gegen eine Schließstellung durch Schwerkraft vorbelastet ist.

26. Ventilanordnung nach Anspruch 19, wobei der Ventilkörper (18) aus einem Material ausgebildet ist, das nicht an die Kraftstofftankwandstruktur anschweißbar ist.

## Revendications

1. Combinaison d'un réservoir de carburant (10) pour un petit moteur et d'un ensemble (16, 70) de soupape de distribution/d'évent d'aération limitant le sur-remplissage avec une fonction de limitation de pression et de décompression comprenant :
une structure de paroi du réservoir (12, 72) définissant une ouverture d'accès (14, 78),
un capot d'évent (48, 94) avec un orifice (50, 100) de sortie de vapeur, où le capot est formé d'un matériau qui peut être soudé au réservoir de carburant,
une soupape (30, 32, 84, 90) ayant un corps de soupape (18, 74) avec un passage (22, 78) d'évent d'aération qui y est formé, où le corps de soupape possède un siège (26, 82) de soupape de décharge formé par-dessus et où le capot d'évent est reçu sur la soupape de manière à ce que le passage (22, 78) d'évent d'aération communique avec l'orifice (50, 100) de sortie de vapeur, et où le capot d'évent est relié de manière étanche à la structure de paroi du réservoir,
une soupape de décharge (28, 92) disposée sur le siège (26, 82) de la soupape de décharge, la soupape de décharge (28, 92) ayant une portion sensiblement planaire pour la fermeture contre le siège (26, 82) de la soupape de décharge, et
un élément de soupape (60, 62, 104, 106) disposé dans le passage (22, 78) d'évent d'aération, où l'élément de soupape est accueilli par la soupape de décharge (28, 92) et dispose d'un élément de soupape mobile (62, 106) qui fonctionne pour se poser sur le corps de soupape, et où la soupape s'étend dans le réservoir de carburant.

2. Combinaison définie dans la revendication 1, dans laquelle ladite soupape inclut une soupape de décharge qui fonctionne pour empêcher un écoulement à travers le passage d'évent d'aération jusqu'à ce qu'un niveau prédéterminé de pression de vapeur soit atteint dans le réservoir de carburant.

3. Combinaison définie dans la revendication 2, dans laquelle ladite soupape de décharge inclut une soupape de décompression (60, 62, 104, 106) qui fonctionne pour permettre un écoulement inverse à travers la soupape de décharge lorsque la pression sub-atmosphérique se produit dans le réservoir de carburant.

4. Combinaison définie dans la revendication 3, dans laquelle la soupape de décompression inclut un élément de soupape sphérique (62, 106).

5. Combinaison définie dans la revendication 1, dans laquelle la soupape inclut une soupape (30, 84) actionnée par un flotteur.

6. Combinaison définie dans la revendication 5, dans laquelle la soupape actionnée par un flotteur inclut un élément de soupape flexible (32, 90) disposé sur sa surface supérieure.

7. Combinaison définie dans la revendication 1, dans laquelle la soupape de décharge inclut un élément de soupape (62, 106) qui est maintenu par gravité dans une position fermée.

8. Combinaison définie dans la revendication 7, dans laquelle une soupape de décompression est disposée dans l'élément de soupape maintenu par gravité.

9. Combinaison définie dans la revendication 1, dans laquelle le corps de soupape (18) est réalisé en un matériau qui n'est peut pas être soudé à la structure de paroi du réservoir.

10. Combinaison définie dans la revendication 1, dans laquelle la soupape inclut un corps de soupape (74) intégré avec une portion de la structure de paroi du réservoir.

11. Procédé de fabrication d'un réservoir de carburant (10) pour un petit moteur avec un ensemble de soupape de distribution/d'évent d'aération limitant le sur-remplissage comprenant le fait de :
former un capot d'évent (48, 94) en un matériau qui peut être soudé au réservoir de carburant et former un passage (50, 100) de sortie de vapeur dans le capot d'évent;
disposer une soupape (30, 32, 84, 90) dans le réservoir de carburant, la soupape ayant un corps de soupape (18, 74) avec un passage (22, 78) d'évent d'aération qui y est formé et un siège (26, 82) de la soupape de décharge formé par-dessus;
disposer une soupape de décharge (28, 92) sur le siège (26, 28) de la soupape de décharge, la soupape de décharge (28, 92) ayant une portion sensiblement planaire pour la fermeture contre le siège (26, 28) de la soupape de décharge pour empêcher un écoulement au passage (50, 100) de sortie de vapeur à une pression de vapeur dans le réservoir de carburant qui est inférieure à un niveau de pression prédéterminé;
disposer un élément de soupape (60, 62, 104, 106) dans le passage (22, 78) d'évent d'aération, où l'élément de soupape est accueilli par la soupape de décharge (28, 92) et dispose d'un élément de soupape mobile (62, 106) qui fonctionne pour se poser sur le corps de soupape; et
positionner le capot d'évent (48, 94) sur la soupape de décharge (28, 92) et fixer le capot d'évent à la paroi du réservoir de carburant.

12. Procédé défini dans la revendication 11, dans lequel l'étape qui consiste à fixer le capot d'évent à la paroi du réservoir inclut un soudage.

13. Procédé défini dans la revendication 11, dans lequel l'étape qui consiste à disposer une soupape de décharge (28, 92) inclut le fait de disposer une soupape de décompression (60, 62, 104, 106).

14. Procédé défini dans la revendication 13, dans lequel l'étape qui consiste à disposer une soupape de décompression inclut le fait de disposer un élément de soupape mobile (62, 106) dans la soupape de décharge.

15. Procédé défini dans la revendication 14, dans lequel l'étape qui consiste à disposer un élément de soupape mobile inclut le fait de disposer un élément de soupape sphérique (62, 106).

16. Procédé défini dans la revendication 11 dans lequel l'étape qui consiste à disposer une soupape inclut le fait de disposer une soupape (30, 84) actionnée par un flotteur.

17. Procédé défini dans la revendication 11, dans lequel l'étape qui consiste à disposer une soupape inclut le fait de fixer la soupape au capot pour former un sous-ensemble avant de raccorder le capot d'évent au réservoir de carburant.

18. Procédé défini dans la revendication 11 dans lequel l'étape qui consiste à disposer une soupape inclut le fait d'intégrer un élément (74) de corps de soupape avec une portion de la structure de paroi du réservoir.

19. Ensemble de soupapes (16) pour une utilisation dans un réservoir de carburant pour un petit moteur, comprenant :
un capot d'évent (48, 94) avec un orifice (50, 100) de sortie de vapeur, le capot étant formé en un matériau qui peut être soudé au réservoir de carburant;
une soupape (30, 32, 84, 90) ayant un corps de soupape (18, 74) avec un passage (22, 78) d'évent d'aération qui y est formé et un siège (26, 82) de la soupape de décharge formé par-dessus, où le capot d'évent est reçu sur la soupape de manière à ce que le passage (22, 78) de l'évent d'aération communique avec l'orifice (50, 100) de sortie de vapeur, et où le capot d'évent est configuré pour être relié de manière étanche au réservoir de carburant, et où la soupape est adaptée pour s'étendre dans le réservoir de carburant,
une soupape de décharge (28, 92) disposée sur le siège (26, 82) de la soupape de décharge, la soupape de décharge (28, 92) ayant une portion sensiblement planaire pour la fermeture contre le siège (26, 82) de la soupape de décharge, et
un élément de soupape (60, 62, 104, 106) disposé dans le passage (22, 78) de l'évent, où l'élément de soupape (60, 62, 104, 106) est accueilli par la soupape de décharge (28, 92) et dispose d'un élément de soupape mobile (62, 106) qui fonctionne pour se poser sur le corps de soupape.

20. Ensemble de soupapes de la revendication 19, dans lequel la soupape de décharge fonctionne pour empêcher un écoulement à travers le passage d'évent jusqu'à ce qu'un niveau prédéterminé de pression de vapeur soit atteint dans le réservoir de carburant.

21. Ensemble de soupapes de la revendication 20, dans lequel ladite soupape de décharge inclut une soupape de décompression (60, 62, 104, 106) qui fonctionne pour permettre un écoulement inverse à travers la soupape de décharge lorsqu'une pression sub-atmosphérique se produit dans le réservoir de carburant.

22. Ensemble de soupapes de la revendication 21, dans lequel la soupape de décompression inclut un élément de soupape sphérique (62, 106).

23. Ensemble de soupapes de la revendication 19, dans lequel la soupape inclut une soupape (30, 84) actionnée par un flotteur disposée dans le corps de soupape (18, 74).

24. Ensemble de soupapes de la revendication 23, dans lequel la soupape actionnée par un flotteur inclut un élément de soupape flexible (32, 90) disposé sur sa surface supérieure.

25. Ensemble de soupapes de la revendication 19, dans lequel la soupape de décharge inclut un élément de soupape (62, 106) maintenu par gravité dans une position fermée.

26. Ensemble de soupapes de la revendication 19, dans lequel le corps de soupape (18) est formé d'un matériau qui n'est peut pas être soudé à la structure de paroi du réservoir de carburant.
